# EUROPEAN PATENT APPLICATION

(11) **EP 4 376 186 A2**
(43) Date of publication of application: **29.05.2024**
(21) Application number: 22217058.1
(22) Date of filing: 29.12.2022
(51) Int. Cl.: H01M 50/213

(54) **ENERGY STORAGE POWER SUPPLY**

(30) Priority: 24.11.2022 CN 202223138036 U
(71) Applicant: Guangdong Aoyun Technology Co., Ltd., 516006 Huizhou Guangdong (CN)
(72) Inventor: ZHU, Xueping, Huizhou (CN)
(74) Representative: Herrero & Asociados, S.L.

(57) **Abstract**

The present disclosure provides an energy storage power supply, including the energy storage housing, the several cells, the first electrode plate and the second electrode plate.when the first electrode plate is connected with the anode of the cell, and the second electrode plate is connected with the cathode of the cell. During the production of energy storage power supplies, it is only necessary to directly plug the several cells into the several cell compartments, then fix the several cells in the cell compartments through the first electrode plate and the second electrode plate, and connect the several cells in parallel or in series to form a high-capacity battery pack, the battery pack is easy to assemble and replaces the conventional battery packs on the market, the elimination of the series of procedures for packing cells into a battery pack is convenient for the automatic production and reduces the production cost.

## Description

### CROSS-REFERENCE TO RELATED APPLICATIONS

The application claims priority of Chinese patent application CN202223138036.5, filed on November 24, 2022, which is incorporated herein by reference in its entireties.

### TECHNICAL FIELD

The present disclosure relates to the field of power supplies, and in particular, to an energy storage power supply.

### BACKGROUND

As a tool for storing energy and supplying power, an energy storage power supply usually needs to be provided with a large number of cells. For the existing energy storage power supplies on the market, several cells are packed into a battery pack by means of a series of procedures such as binding, gluing, filling, blow-molding, sealing and decoration, and then the entire battery pack is put into a housing of the energy storage power supply. Due to the multiple procedures such as binding, gluing, filling, blow-molding, sealing and decoration, and certain errors in the cells, the battery pack have a lower dimensional accuracy. There are large errors between various battery packs, making it difficult to put the entire battery pack into the housing of the energy storage power supply, so that the requirement for the assembling precision between the battery pack and the housing of the energy storage power supply is extremely high. The defective rate is high, and it is not environmentally friendly. The production efficiency is greatly affected. Moreover, the integrated battery pack has low heat dissipation performance and low safety. Therefore, it is in an urgent need to provide an energy storage power supply with simple assembling, good heat dissipation performance, high safety, environmental friendliness and convenience for automatic production in the market to reduce the defective rate of the energy storage power supply and improve the production efficiency and the safety.

### SUMMARY

In order to overcome the shortcomings in the prior art, the present disclosure provides an energy storage power supply with simple assembling, good heat dissipation performance, high safety, environmental friendliness and convenience for automatic production, thus reducing the defective rate of the energy storage power supply and improving the production efficiency and the safety.

The technical solution adopted by the present disclosure to solve the technical problem is as follows: the present disclosure provides an energy storage power supply, including an energy storage housing, several cells, a first electrode plate and a second electrode plate, wherein several cell compartments are arranged on the energy storage housing; one end of each cell compartment is provided with a first opening, and the other end of the cell compartment is provided with a second opening; and when a cell is plugged into the cell compartment via the first opening or the second opening, the first electrode plate is covered at the first opening, and the second electrode plate is covered at the second opening, so that the first electrode plate is connected with an anode of the cell, and the second electrode plate is connected with a cathode of the cell.

As the improvement of the present disclosure,the first electrode plate is a first nickel strap, the second electrode plate is a second nickel strap, when the cell is plugged in the cell compartment via the first opening or the second opening, the first nickel strap is connected with one side of the energy storage housing, and the second nickel strap is connected with the other side of the energy storage housing, so that the first nickel strap is covered at the first opening, and the second nickel strap is covered at the second opening; the first nickel strap is connected with an anode of the cell; and the second nickel strap is connected with a cathode of the cell.

As the improvement of the present disclosure, further including a front shell and a rear shell, wherein the energy storage housing is located between the front shell and the rear shell; when the front shell is detachably covered at the rear shell, the front shell is connected with one side of the energy storage housing, and the rear shell is connected with the other side of the energy storage housing.

As the improvement of the present disclosure, when the front shell is detachably covered at the rear shell, an accommodating cavity is formed; and the several cell compartments are located in the accommodating cavity.

As the improvement of the present disclosure, the several cell compartments are arranged in a honeycomb-shaped manner.

As the improvement of the present disclosure, the several cell compartments are spaced part by partition plates.As the improvement of the present disclosure, one side of the accommodating cavity is provided with an air inlet; the other side of the accommodating cavity is provided with an air outlet; a heat dissipation channel is arranged between the air inlet and the air outlet; a heat dissipation fan is arranged at the air outlet; and the heat dissipation fan is used to drive air to pass through the air inlet, the heat dissipation channel and the air outlet in turn, and to dissipate heat of the cells and the cell compartments.

As the improvement of the present disclosure, an inverter is arranged above the cell compartments; the inverter is electrically connected with the cells; several heat dissipation sheets are arranged on the inverter; and a guard plate is arranged below the cell compartments.

As the improvement of the present disclosure, further including a control circuit board, wherein the control circuit board is electrically connected with the cells; the control circuit board is located in the accommodating cavity; and the control circuit board is connected with the energy storage housing/front shell/rear shell. As the improvement of the present disclosure, when the cell is plugged in the cell compartment via the first opening or the second opening, the first electrode plateis welded with one side of the energy storage housing, and the second electrode plate is welded with the other side of the energy storage housing, so that the first electrode plateis covered at the first opening, and the second electrode plate is covered at the second opening; the first electrode plateis connected with an anode of the cell; and the second electrode plateis connected with a cathode of the cell.

An energy storage power supply, including an energy storage housing, at least one cell, a first electrode plate and a second electrode plate, wherein at least one cell compartment corresponding to the at least one cell isdisposed on the energy storage housing; one end of the cellcompartment is provided with a first opening, and the other end of the cell compartment is provided with a second opening; and when a cell is plugged into the corresponding cell compartment via the first opening or the second opening, the first electrode plate is covered at the first opening, and the second electrode plate is covered at the second opening, so that the first electrode plate is connected with an anode of the cell, and the second electrode plate is connected with a cathode of the cell.

As the improvement of the present disclosure, when the cell is plugged in the cell compartment via the first opening or the second opening, the first electrode plate is connected with one side of the energy storage housing, and the second electrode plate is connected with the other side of the energy storage housing, so that the first electrode plate is covered at the first opening, and the second electrode plate is covered at the second opening; the first electrode plate is connected with an anode of the cell; and the second electrode plate is connected with a cathode of the cell.

As the improvement of the present disclosure, further including a front shell and a rear shell, wherein the energy storage housing is located between the front shell and the rear shell; when the front shell is detachably covered at the rear shell, the front shell is connected with one side of the energy storage housing, and the rear shell is connected with the other side of the energy storage housing.

As the improvement of the present disclosure, when the front shell is detachably covered at the rear shell, an accommodating cavity is formed; and thecell compartment is located in the accommodating cavity.

As the improvement of the present disclosure, one side of the accommodating cavity is provided with an air inlet; the other side of the accommodating cavity is provided with an air outlet; a heat dissipation channel is arranged between the air inlet and the air outlet; a heat dissipation fan is arranged at the air outlet; and the heat dissipation fan is used to drive air to pass through the air inlet, the heat dissipation channel and the air outlet in turn, and to dissipate heat of the cell and the cell compartment.

As the improvement of the present disclosure, an inverter is arranged above the cell compartment; the inverter is electrically connected with the cell; a heat dissipation sheets is arranged on the inverter; and a guard plate is arranged below the cell compartment.

As the improvement of the present disclosure, further including a control circuit board, wherein the control circuit board is electrically connected with the cell; the control circuit board is located in the accommodating cavity; and the control circuit board is connected with the energy storage housing/front shell/rear shell.

As the improvement of the present disclosure, the first electrode plate is a first nickel strap; the second electrode plate is a second nickel strap; when the cell is plugged in the cell compartment via the first opening or the second opening, the first nickel strap is welded with one side of the energy storage housing, and the second nickel strap is welded with the other side of the energy storage housing, so that the first nickel strap is covered at the first opening, and the second nickel strap is covered at the second opening; the first nickel strap is connected with an anode of the cell; and the second nickel strap is connected with a cathode of the cell.

The beneficial effects of the present disclosure lie in: the present disclosure provides an energy storage power supply, the energy storage power supply includes the energy storage housing, the several cells, the first electrode plate and the second electrode plate. The energy storage housing is provided with the several cell compartments. One end of each cell compartment is provided with the first opening, and the other end of the cell compartment is provided with the second opening. When the cell is plugged into the cell compartment via the first opening or the second opening, the first electrode plate is covered at the first opening, and the second electrode plate is covered at the second opening, so that the first electrode plate is connected with the anode of the cell, and the second electrode plate is connected with the cathode of the cell. Therefore, during the production of energy storage power supplies, it is only necessary to directly plug the several cells into the several cell compartments, then fix the several cells in the cell compartments through the first electrode plate and the second electrode plate, and connect the several cells in parallel or in series to form a high-capacity battery pack, so that the energy storage power supply has the functions of storing energy and supplying power. The battery pack is easy to assemble and replaces the conventional battery packs on the market, thus eliminating a series of procedures such as binding of the several cells, gluing, filling, blow-molding, sealingand decoration, achieving environmental friendliness, facilitating automatic production, reducing the defective rate of energy storage power supplies, and improving the production efficiency and the safety. Further, compared with the existing battery pack on the market, this battery pack has the advantages below. The several cells are plugged in the cell compartments, so that the several cells can be isolated from one another. Furthermore, heat generated by the cells during operation can be dissipated to the outside through the energy storage housing, which greatly improves the heat dissipation performance and safety of the energy storage power supply. Further, according to the battery pack of the existing energy storage power supply on the market, when the energy storage power supply is collided or falls off, the battery pack easily falls apart. In the present disclosure, the cells are plugged in the several cell compartments of the energy storage housing, then fixed in the cell compartments through the first electrode plate and the second electrode plate, and connected in parallel or series together, so that the structure is more stable. Even if the energy storage power supply is collided or falls off, the cells can also be firmly fixed in the cell compartments and will not fall apart, so that the energy storage power supply can still store energy and supply power stably, which greatly improves the break resistance and safety of the energy storage power supply.

### BRIEF DESCRIPTION OF THE DRAWINGS

In order to explain the technical solutions of the embodiments of the present disclosure more clearly, the following will briefly introduce the accompanying drawings used in the embodiments. Apparently, the drawings in the following description are only some embodiments of the present disclosure. Those of ordinary skill in the art can obtain other drawings based on these drawings without creative work.

The present disclosure is further described below in detail in combination with the accompanying drawings and embodiments.
FIG. 1 is a schematic diagram of an overall structure of the present disclosure;
FIG. 2 is an exploded diagram of the present disclosure;
FIG. 3 is an enlarged diagram of the part A of FIG. 2;
FIG. 4 is a sectional view sectioned along an energy storage housing, a cell and a cell compartment;
FIG. 5 is a sectional view sectioned along an energy storage housing, a front shell, a rear shell, a cell, a cell compartment, a first electrode plate and a second electrode plate; and
FIG. 6 is a schematic diagram of another overall structure of the present disclosure.

### DETAILED DESCRIPTION OF THE EMBODIMENTS

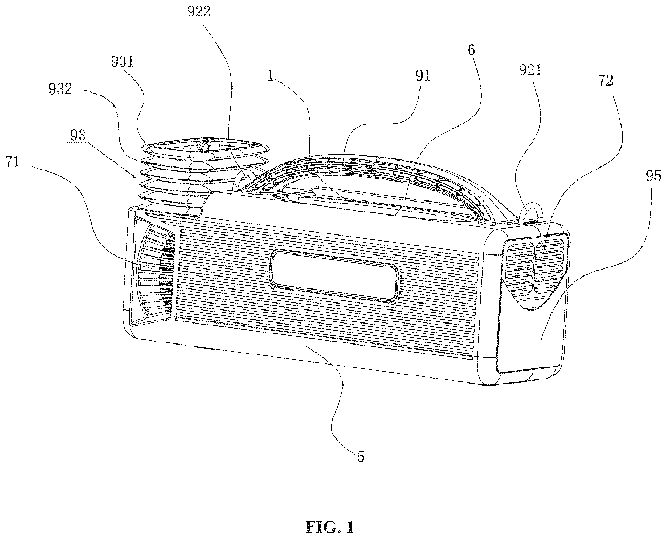

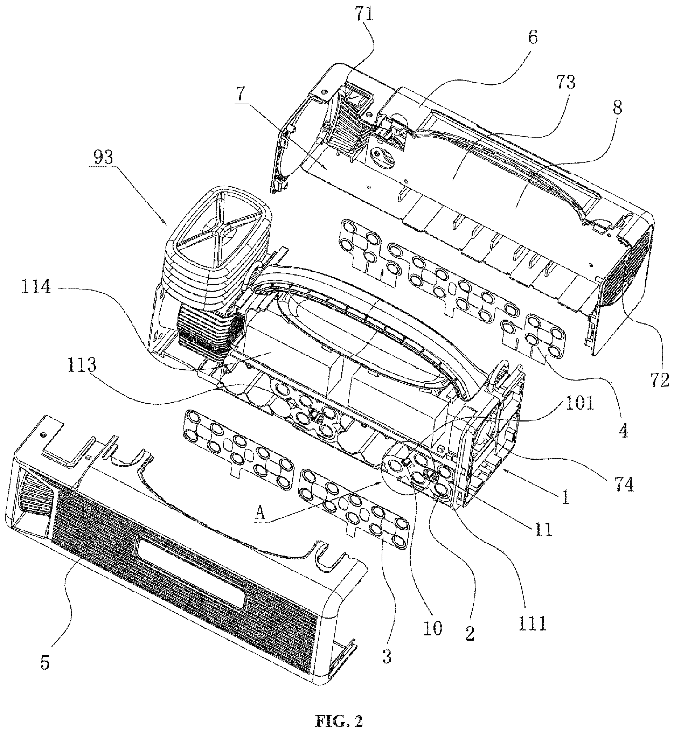

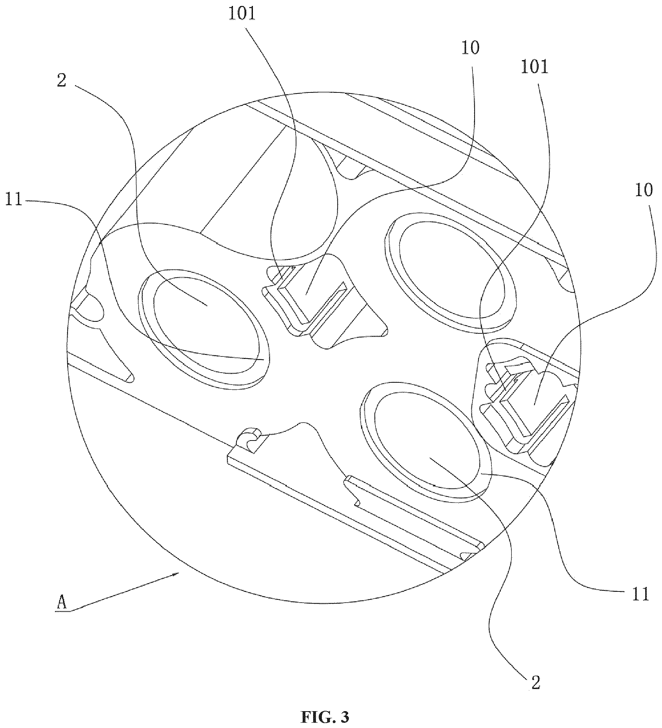

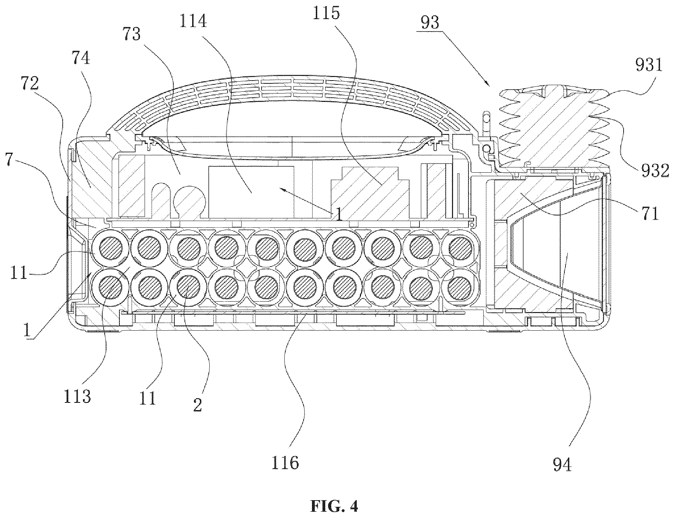

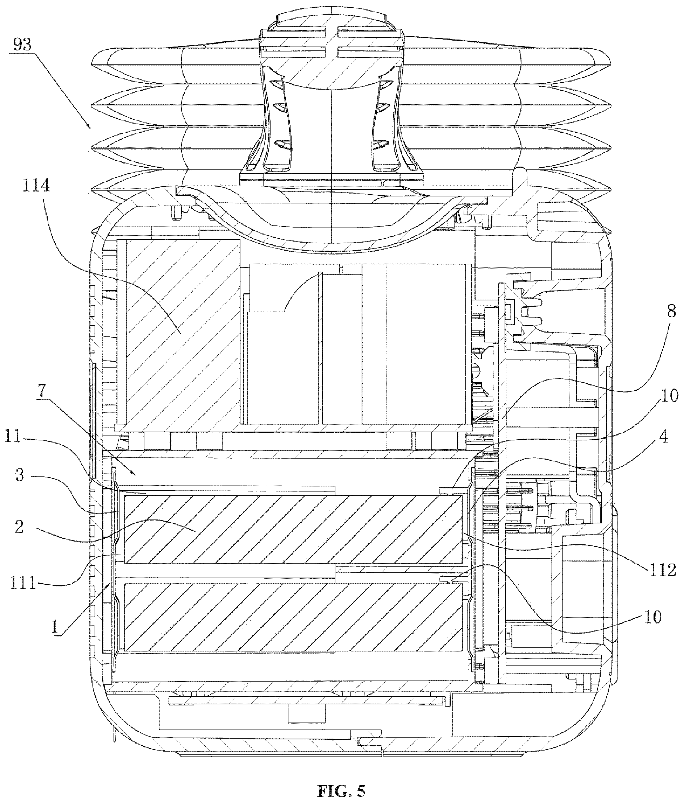

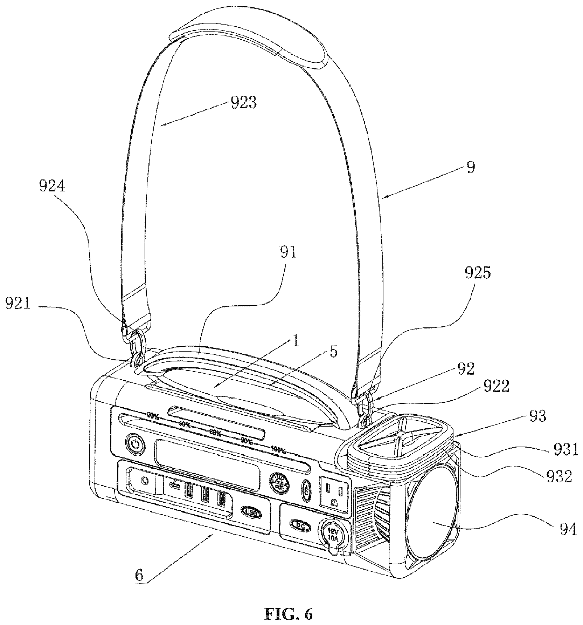

Referring to FIG. 1 to FIG. 6, an energy storage power supply includes an energy storage housing 1, several cells 2, a first electrode plate 3 and a second electrode plate 4. Several cell compartments 11 are arranged on the energy storage housing 1. One end of each cell compartment 11 is provided with a first opening 111, and the other end of the cell compartment 11 is provided with a second opening 112. When a cell 2 is plugged into the cell compartment 11 via the first opening 111 or the second opening 112, the first electrode plate 3 is covered at the first opening 111, and the second electrode plate 4 is covered at the second opening 112, so that the first electrode plate 3 is connected with an anode of the cell 2, and the second electrode plate 4 is connected with a cathode of the cell 2. By means of the above structure, the energy storage power supply includes the energy storage housing, the several cells, the first electrode plate and the second electrode plate. The energy storage housing is provided with the several cell compartments. One end of each cell compartment is provided with the first opening, and the other end of the cell compartment is provided with the second opening. When the cell is plugged into the cell compartment via the first opening or the second opening, the first electrode plate is covered at the first opening, and the second electrode plate is covered at the second opening, so that the first electrode plate is connected with the anode of the cell, and the second electrode plate is connected with the cathode of the cell. Therefore, during the production of energy storage power supplies, it is only necessary to directly plug the several cells into the several cell compartments, then fix the several cells in the cell compartments through the first electrode plate and the second electrode plate, and connect the several cells in parallel or in series to form a high-capacity battery pack, so that the energy storage power supply has the functions of storing energy and supplying power. The battery pack is easy to assemble and replaces the conventional battery packs on the market, thus eliminating a series of procedures such as binding of the several cells, gluing, filling, blow-molding, sealing and decoration, achieving environmental friendliness, facilitating automatic production, reducing the defective rate of energy storage power supplies, and improving the production efficiency and the safety. Further, compared with the existing battery pack on the market, this battery pack has the advantages below. The several cells are plugged in the cell compartments, so that the several cells can be isolated from one another. Furthermore, heat generated by the cells during operation can be dissipated to the outside through the energy storage housing, which greatly improves the heat dissipation performance and safety of the energy storage power supply. Further, according to the battery pack of the existing energy storage power supply on the market, when the energy storage power supply is collided or falls off, the battery pack easily falls apart. In the present disclosure, the cells are plugged in the several cell compartments of the energy storage housing, then fixed in the cell compartments through the first electrode plate and the second electrode plate, and connected in parallel or series together, so that the structure is more stable. Even if the energy storage power supply is collided or falls off, the cells can also be firmly fixed in the cell compartments and will not fall apart, so that the energy storage power supply can still store energy and supply power stably, which greatly improves the break resistance and safety of the energy storage power supply.

When the cell 2 is plugged in the cell compartment 11 via the first opening 111 or the second opening 112, the first electrode plate 3 is connected with one side of the energy storage housing 1, and the second electrode plate 4 is connected with the other side of the energy storage housing 1, so that the first electrode plate 3 is covered at the first opening 111, and the second electrode plate 4 is covered at the second opening 112. The first electrode plate 3 is connected with an anode of the cell 2, and the second electrode plate 4 is connected with a cathode of the cell 2. Specifically, the first electrode plate 3 is a first nickel strap. The second electrode plate 4 is a second nickel strap. When the cell 2 is plugged in the cell compartment 11 via the first opening 111 or the second opening 112, the first nickel strap is welded with one side of the energy storage housing 1, and the second nickel strap is welded with the other side of the energy storage housing 1, so that the first nickel strap is covered at the first opening 111, and the second nickel strap is covered at the second opening 112. The first nickel strap is connected with an anode of the cell 2; and the second nickel strap is connected with a cathode of the cell 2. Further, the first nickel strap is welded with one side of the energy storage housing 1 by means of spot welding or laser welding, and the second nickel strap is welded with the other side of the energy storage housing 1 by means of spot welding or laser welding. By means of the above structure, connection between the first electrode plate, as well as the second electrode plate, and the energy storage housing is effectively achieved. The first electrode plate and the second electrode plate stably fix the cells in the cell compartments. Furthermore, the several cells are connected in series or in parallel to form the high-capacity battery pack, so that the energy storage power supply has the functions of storing energy and supplying power. The battery pack is easy to assemble and replaces the conventional battery packs on the market, thus eliminating a series of procedures such as binding of the several cells, gluing, filling, blow-molding, sealing and decoration, achieving environmental friendliness, facilitating automatic production, reducing the defective rate of energy storage power supplies, and improving the production efficiency and the safety.

In this embodiment, a side wall of each cell compartment 11 is further provided with an elastic member 10. When the cell 2 is plugged in the cell compartment 11 via the first opening 111 or the second opening 112, the elastic member 10 presses and locks the cell into the cell compartment. Specifically, the elastic member 10 is an elastic wall. Slots 101 are arranged on two sides of the elastic wall. When the cell 2 is plugged in the cell compartment 11 via the first opening 111 or the second opening 112, the slots are arranged on the two sides of the elastic wall, so that the elastic wall can be pressed to elastically deform by the cell. In addition, an elastic restoration force generated by the elastic deformation of the elastic wall caused by pressure of the cell presses and locks the cell in the cell compartment. By means of the above structure, the energy storage power supply is reasonable in design and simple and compact in structure; the cells can be effectively fixed in the cell compartment and prevented from shaking, which greatly improves the stability and safety of the energy storage power supply.

In this embodiment, the energy storage power supply further includes a front shell 5 and a rear shell 6. The energy storage housing 1 is located between the front shell 5 and the rear shell 6. When the front shell 5 is detachably covered at the rear shell 6, the front shell 5 is connected with one side of the energy storage housing 1, and the rear shell 6 is connected with the other side of the energy storage housing 1. When the front shell 5 is detachably covered at the rear shell 6, an accommodating cavity 7 is formed. The several cell compartments 11 are located in the accommodating cavity 7. By means of the above structure, the cells are fixed by the cell compartments, the first electrode plate and the second electrode plate of the energy storage housing, the fixing of the positions of the cells is not achieved by the assembling between the energy storage housing and the front shell, as well as the rear shell. The front shell and the rear shell are closed to only provide the accommodating cavity for accommodating the cell compartments. Therefore, the requirement for the assembling precision between the energy storage housing and the front shell, as well as the rear shell, is extremely low, and the dimensional accuracy for the accommodating cavity is also extremely low. The battery pack is easy to assemble and replaces the conventional battery packs on the market, thus eliminating a series of procedures such as binding of the several cells, gluing, filling, blow-molding, sealing and decoration, achieving environmental friendliness, facilitating automatic production, reducing the defective rate of energy storage power supplies, improving the production efficiency and the safety, and greatly reducing the production cost.

In this embodiment, the several cell compartments 11 are arranged in a honeycomb-shaped manner. The several cell compartments 11 are spaced apart by partition plates 113. By means of the above structure, the several cell compartments arranged in the honeycomb-shaped manner are spaced apart by partition plates, so that heat generated by the cells during operation is dissipated to the outside through the energy storage housing and the partition plates, which can effectively prevent such a phenomenon of damage to the cells, and even explosion, caused by accumulation of the heat of the several cells, thus greatly improving the heat dissipation performance and the safety of the energy storage power supply and also improving the power supply efficiency and the power supply stability of the energy storage power supply.

In this embodiment, one side of the accommodating cavity 7 is provided with an air inlet 71, and the other side of the accommodating cavity 7 is provided with an air outlet 72. A heat dissipation channel 73 is arranged between the air inlet 71 and the air outlet 72. A heat dissipation fan 74 is arranged at the air outlet 72. The heat dissipation fan 74 is used to drive air to pass through the air inlet 71, the heat dissipation channel 73 and the air outlet 72 in turn, and to dissipate heat of the cells 2 and the cell compartments 11. An inverter 114 is arranged above the cell compartments 11. The inverter 114 is electrically connected with the cells 2. Several heat dissipation sheets 115 are arranged on the inverter 114. A guard plate 116 is arranged below the cell compartments 11. Specifically, the energy storage power supply further includes a control circuit board 8. The control circuit board 8 is electrically connected with the cells 2. The control circuit board 8 is located in the accommodating cavity 7. The control circuit board 8 is connected with the energy storage housing 1/front shell 5/rear shell 6. By means of the above structure, the installation of the inverter and the control circuit board is effectively achieved. The inverter can convert direct current of the cells into alternating current and output the alternating current to electronic equipment for use. Furthermore, the heat dissipation sheets can dissipate the heat generated by the inverter during operation, so as to reduce the operating temperature of the inverter and improve the operating stability of the inverter. Further, the heat dissipation fan can be used for dissipating heat of the cells and dissipating heat of the control circuit board and the inverter. The heat in the energy storage power supply is dissipated to the outside, so as to reduce the overall temperature of the energy storage power supply, which further improves the heat dissipation performance and safety of the energy storage power supply.

The energy storage power supply further includes a strap 9. The power supply housing/front shell/rear shell is provided with a handle 91. A hanging portion 92 is arranged at the handle 91. The strap 9 is detachably connected to the hanging portion 92. By the above structure, the energy storage power supply includes the power supply housing and the strap. The power supply housing is provided with the handle. The hanging portion is arranged at the handle. The strap is detachably connected to the hanging portion. Therefore, a user can not only carry the energy storage power supply with the handle, but also easily carry the energy storage power supply with the strap. Furthermore, the strap is connected to the hanging portion at the handle, so that when slinging the energy storage power supply over the shoulder with the strap, the user can enclasp the handle under the help of an arm to fix the position of the energy storage power supply, prevent the energy storage power supply from swinging during movement of the user, and avoid the energy storage power supply from sliding off from the shoulder of the user. The stability and the safety are high. Moreover, the shoulder and the arm of the user simultaneously bear the load, so that the strength of the body can be fully mobilized, and it is labor-saving. The phenomenon of partial muscle ache can be effectively prevented, and the user can carry the energy storage power supply for a long time. Further, when the user needs to free up hands for other work, the energy storage power supply can be slung across the body through the strap to prevent slipping off.

In this embodiment, the hanging portion 92 includes a first hanging opening 921 formed in one end of the handle 91, and a second hanging opening 922 formed in the other end of the handle 91. One end of the strap 9 is detachably connected to the first hanging opening 921, and the other end of the strap 9 is detachably connected to the second hanging opening 922, so as to form a hanging space 923 for hanging by a user between the strap 9 and the handle 91. One end of the strap 9 is provided with a first hanging buckle 924, and the other end of the strap 9 is provided with a second hanging buckle 925; one end of the strap 9 is detachably connected to the first hanging opening 921 through the first hanging buckle 924; and the other end of the strap 9 is detachably connected to the second hanging opening 922 through the second hanging buckle 925. By the above structure, the energy storage power supply is reasonable in design, simple in structure and stable in connection, and detachable connection between the strap and the hanging portion is effectively achieved; furthermore, the strap and the hanging portion are detachably connected, so that mounting and storage are facilitated. For example, when the user needs to carry the energy storage power supply, the first hanging buckle of the strap can be connected to the first hanging buckle, and the second hanging buckle of the strap is connected to the second hanging opening, so as to form the hanging space for hanging by the user between the strap and the handle, and the user can sling the energy storage power supply over the shoulder through the hanging space, or sling the energy storage power supply across the body; when the user needs to store the energy storage power supply, the first hanging buckle of the strap can be separated from the first hanging opening, and the second hanging buckle of the strap can be separated from the second hanging opening, so as to separate the strap from the handle; and the energy storage power supply and the strap are respectively stored. The first hanging opening and the second hanging opening are respectively arranged at two ends of the handle, so that when the user slings the energy storage power supply over the shoulder with the strap, the user enclasps the handle under the help of the arm, so as to fix the position of the energy storage power supply, prevent the energy storage power supply from swinging during movement of the user, and avoid the energy storage power supply from sliding off from the shoulder of the user.

In this embodiment, an adjustment device is further arranged on the strap to adjust the length of the strap. By the above structure, the user can adjust the length of the strap through the adjustment device, so that the strap can adapt to the figure of the user, which greatly improves the generality and adaptability of the energy storage power supply.

In this embodiment, a light-transmitting lampshade 93 and a night lamp are further arranged on the front shell/rear shell. The lampshade 93 is foldable. The night lamp is arranged in the lampshade 93. A longitudinal cross section of the lampshade 93 is a waveform, and the lampshade 93 is foldable at a wave crest 931 and wave trough 932 of the waveform. By the above structure, since the lampshade is foldable at the wave crest and the wave trough, a folding function of the lampshade is realized. When the lampshade is unfolded, the lighting brightness of the night lamp is adjusted; and furthermore, since the lampshade is foldable, when the user needs to store the energy storage power supply, the lampshade can be folded to reduce the volume of the energy storage power supply and facilitate the storage.

In this embodiment, a flashlight 94 is further arranged on the front shell/rear shell, and the flashlight 94 is used by a user for lighting. The flashlight 94 is arranged on a side wall of the front shell/rear shell. By the above structure, the arrangement of the flashlight, the night lamp and the lampshade is effectively achieved. Furthermore, since the flashlight is arranged on the side wall of the front shell/rear shell, when the user slings the energy storage power supply over the shoulder and moves, the position of the energy storage power supply can be controlled under the help of the arm to control the irradiation position of the flashlight to illuminate a far distance. In addition, the lampshade is arranged on the night lamp, so that light emitted by the night lamp arranged above the flashlight can be scattered after passing through the lampshade to illuminate places around the energy storage power supply. Moreover, the light is soft and not dazzling, which can create a comfortable and safe mood, so that the user experience is further improved.

In this embodiment, a storage bag 95 is further arranged on a side wall of the front shell/rear shell. The storage bag 95 is a storage string bag. By the above structure, the user can store belongings through the storage bag, and conveniently pick and place the belongings, which further improves the user experience.

As described above, one or more embodiments are provided in conjunction with the detailed description, The specific implementation of the present disclosure is not confirmed to be limited to that the description is similar to or similar to the method, the structure and the like of the present disclosure, or a plurality of technical deductions or substitutions are made on the premise of the conception of the present disclosure to be regarded as the protection of the present disclosure.

## Claims

1. An energy storage power supply, comprising an energy storage housing, several cells, a first electrode plate and a second electrode plate, wherein several cell compartments are arranged on the energy storage housing; one end of each cell compartment is provided with a first opening, and the other end of the cell compartment is provided with a second opening; and when a cell is plugged into the cell compartment via the first opening or the second opening, the first electrode plate is covered at the first opening, and the second electrode plate is covered at the second opening, so that the first electrode plate is connected with an anode of the cell, and the second electrode plate is connected with a cathode of the cell.

2. The energy storage power supply according to claim 1, wherein when the cell is plugged in the cell compartment via the first opening or the second opening, the first electrode plate is connected with one side of the energy storage housing, and the second electrode plate is connected with the other side of the energy storage housing, so that the first electrode plate is covered at the first opening, and the second electrode plate is covered at the second opening; the first electrode plate is connected with an anode of the cell; and the second electrode plate is connected with a cathode of the cell.

3. The energy storage power supply according to claim 1, further comprising a front shell and a rear shell, wherein the energy storage housing is located between the front shell and the rear shell; when the front shell is detachably covered at the rear shell, the front shell is connected with one side of the energy storage housing, and the rear shell is connected with the other side of the energy storage housing.

4. The energy storage power supply according to claim 3, wherein when the front shell is detachably covered at the rear shell, an accommodating cavity is formed; and the several cell compartments are located in the accommodating cavity.

5. The energy storage power supply according to claim 1, wherein the several cell compartments are arranged in a honeycomb-shaped manner.

6. The energy storage power supply according to claim 5, wherein the several cell compartments are spaced part by partition plates.

7. The energy storage power supply according to claim 4, wherein one side of the accommodating cavity is provided with an air inlet; the other side of the accommodating cavity is provided with an air outlet; a heat dissipation channel is arranged between the air inlet and the air outlet; a heat dissipation fan is arranged at the air outlet; and the heat dissipation fan is used to drive air to pass through the air inlet, the heat dissipation channel and the air outlet in turn, and to dissipate heat of the cells and the cell compartments.

8. The energy storage power supply according to claim 7, wherein an inverter is arranged above the cell compartments; the inverter is electrically connected with the cells; several heat dissipation sheets are arranged on the inverter; and a guard plate is arranged below the cell compartments.

9. The energy storage power supply according to claim 8, further comprising a control circuit board, wherein the control circuit board is electrically connected with the cells; the control circuit board is located in the accommodating cavity; and the control circuit board is connected with the energy storage housing/front shell/rear shell.

10. The energy storage power supply according to claim 2, wherein the first electrode plate is a first nickel strap; the second electrode plate is a second nickel strap; when the cell is plugged in the cell compartment via the first opening or the second opening, the first nickel strap is welded with one side of the energy storage housing, and the second nickel strap is welded with the other side of the energy storage housing, so that the first nickel strap is covered at the first opening, and the second nickel strap is covered at the second opening; the first nickel strap is connected with an anode of the cell; and the second nickel strap is connected with a cathode of the cell.

11. An energy storage power supply, comprising an energy storage housing, at least one cell, a first electrode plate and a second electrode plate, wherein at least one cell compartment corresponding to the at least one cell isdisposed on the energy storage housing; one end of the cell compartment is provided with a first opening, and the other end of the cell compartment is provided with a second opening; and when a cell is plugged into the corresponding cell compartment via the first opening or the second opening, the first electrode plate is covered at the first opening, and the second electrode plate is covered at the second opening, so that the first electrode plate is connected with an anode of the cell, and the second electrode plate is connected with a cathode of the cell.

12. The energy storage power supply according to claim 12, wherein when the cell is plugged in the cell compartment via the first opening or the second opening, the first electrode plate is connected with one side of the energy storage housing, and the second electrode plate is connected with the other side of the energy storage housing, so that the first electrode plate is covered at the first opening, and the second electrode plate is covered at the second opening; the first electrode plate is connected with an anode of the cell; and the second electrode plate is connected with a cathode of the cell.

13. The energy storage power supply according to claim 11, further comprising a front shell and a rear shell, wherein the energy storage housing is located between the front shell and the rear shell; when the front shell is detachably covered at the rear shell, the front shell is connected with one side of the energy storage housing, and the rear shell is connected with the other side of the energy storage housing.

14. The energy storage power supply according to claim 13, wherein when the front shell is detachably covered at the rear shell, an accommodating cavity is formed; and thecell compartment is located in the accommodating cavity.

15. The energy storage power supply according to claim 14, wherein one side of the accommodating cavity is provided with an air inlet; the other side of the accommodating cavity is provided with an air outlet; a heat dissipation channel is arranged between the air inlet and the air outlet; a heat dissipation fan is arranged at the air outlet; and the heat dissipation fan is used to drive air to pass through the air inlet, the heat dissipation channel and the air outlet in turn, and to dissipate heat of the cell and the cell compartment.
